# EUROPEAN PATENT APPLICATION

(11) **EP 3 460 702 A1**
(43) Date of publication of application: **27.03.2019**
(21) Application number: 17306223.3
(22) Date of filing: 20.09.2017
(51) Int. Cl.: G06F 21/55, G06F 21/52

(54) **METHOD TO DETECT AN ATTACK BY FAULT INJECTION ON A SENSITIVE OPERATION**

(71) Applicant: GEMALTO SA, 92190 Meudon (FR)
(72) Inventor: NEGAPATAN, Alvin Calumpang, 92190 Meudon (FR)
(74) Representative: Bricks, Amélie

(57) **Abstract**

The present invention relates to a method for detecting an attack by fault injection on a sensitive operation executed in a secure electronic token comprising a processor, a memory and a timer configured for measuring time intervals, comprising performed by said processor:
- before the execution of the sensitive operation, determining (S1) a first timer value using said timer,
- storing (S2) said determined first timer value in said memory,
- after the execution of the sensitive operation, determining (S3) a second timer value using said timer,
- computing (S4) an elapsed processing time value from the first timer value and the second timer value,
- an association between reference processing time values and sensitive operations to be protected executable by said secure electronic token being stored in said memory, determining (S5), among said stored reference processing time values, a reference processing time value associated with said executed sensitive operation,
- comparing (S6) the computed elapsed processing time value with the determined reference processing time value,
- when the difference between the computed elapsed processing time value and the determined reference processing time value is bigger than a predetermined threshold, performing (S7) a countermeasure or generating an alarm signal.

## Description

### FIELD OF THE INVENTION

The present invention relates to the field of execution flow protection. It discloses a method for detecting any fault injection attack against a sensitive operation executed on a secure device.

### BACKGROUND OF THE INVENTION

In order to ensure the safety of the data they handle, most sensitive operations such as authentication, signature generation, online payment... use protections such as encryption, and security checks such as checksum verification for detecting any abnormal operation.

Unfortunately attackers have designed attacks such as the fault injection attacks which force errors during the execution of a sensitive operation, so that part of the security operations or protections to be performed during the operation execution are either bypassed or executed in a less secure mode.

It is possible to detect such an alteration of the execution flow of the operation by inserting tracers all along the sensitive parts of a code to be executed, and by checking at the end of execution that all the tracers have been accounted for.

Nevertheless, using such tracers has multiple drawbacks: it increases the size of the code to be executed by adding lines dedicated to tracers management; it makes the source code less readable because of these additions to the source code; and it increases the execution time because of the extra operations to be performed because of the tracers.

Consequently, there is a need for a method enabling to detect the occurrence of a fault injection attack, with a lower footprint on the code and on the execution time than existing tracer-based methods.

### SUMMARY OF THE INVENTION

For this purpose and according to a first aspect, this invention therefore relates to a method for detecting an attack by fault injection on a sensitive operation executed in a secure electronic token comprising a processor, a memory and a timer configured for measuring time intervals, said method comprising performed by said processor:
- before the execution of the sensitive operation, determining a first timer value using said timer,
- storing said determined first timer value in said memory,
- after the execution of the sensitive operation, determining a second timer value using said timer,
- computing an elapsed processing time value from the first timer value and the second timer value,
- an association between reference processing time values and sensitive operations to be protected executable by said secure electronic token being stored in said memory, determining, among said stored reference processing time values, a reference processing time value associated with said executed sensitive operation,
- comparing the computed elapsed processing time value with the determined reference processing time value,
- when the difference between the computed elapsed processing time value and the determined reference processing time value is bigger than a predetermined threshold, performing a countermeasure or generating an alarm signal.

Such a method enables the secure electronic token to detect a fault injection attack at a low cost without any modification of the sensitive operation to be protected.

The method according to the first aspect may also comprise associating, during a token personalization process, said stored reference processing time values with sensitive operations to be protected and storing said associations in a table in said memory.

Accurate reference processing time values are thus predefined and made available to the processor of the secure electronic token for comparison to computed elapsed processing time values.

In a first embodiment, each sensitive operation to be protected is associated with a unique reference processing time value.

It enables the processor to very easily select a reference processing time value for the sensitive operation being executed.

In this first embodiment, for each sensitive operation to be protected, the reference processing time value associated in said memory with said sensitive operation to be protected may be the smallest processing time value among multiple processing time values determined in factory for said sensitive operation to be protected for different combinations of properties of the secure electronic token among the model, the age, the temperature, the environment and the resistance to stress tests of the secure electronic token.

It enables to define for a given sensitive operation a minimal reference processing time taking into account the variability of the processing time for this operation resulting from variations of the characteristics or operational conditions of the secure electronic token.

In a second embodiment, for each sensitive operation to be protected, a plurality of reference processing time values are associated with said sensitive operation to be protected during said association step depending on different properties of said secure electronic token among the model, the age, the temperature, the environment and the resistance to stress tests of said secure electronic token and the step of determining a reference processing time value comprises a step of selection of a target processing time value, as determined processing time value, among the reference processing time values associated with said executed sensitive operation depending on values of one or more of said properties of the secure electronic token at the time of execution of said executed sensitive operation.

It enables the processor to select, for comparison to a measured processing time, the most adequate reference processing time value depending on characteristics or operational conditions of the secure electronic token; which leads to a more accurate detection of a potential fault injection attack.

Said executed sensitive operation may comprise an operation among a checksum verification, an access control check, a cryptographic process.

Said attack may consist in replacing an execution of a first cryptographic process by an execution of a second cryptographic process less secure than the first cryptographic process.

For example, said attack may consist in replacing Triple DES algorithm execution by simplified DES algorithm execution.

Said countermeasure may be among a reset of said executed sensitive operation, an increase in security measures or a blocking of said processor.

Such countermeasure enables to limit the consequences of the fault injection attack.

According to a second aspect, this invention relates to a computer program product directly loadable into the memory of at least one computer, comprising software code instructions for performing the steps of the method according to the first aspect when said product is run on the computer.

According to a third aspect, this invention relates to a smartcard comprising a memory, a timer and a processor configured to perform the steps of the method according to the first aspect.

Said timer may be a software timer or a hardware timer.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 illustrates schematically a secure electronic token according to an embodiment of the present invention;
- Figure 2 illustrates schematically a method for detecting an attack by fault injection on a sensitive operation executed in a secure electronic token according to an embodiment of the present invention.

### DETAILED DESCRIPTION OF EMBODIMENTS OF THE INVENTION

In the description detailed below, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The description detailed below is, therefore, not to be taken in a limiting sense, and the scope of the present invention is defined only by the appended claims, appropriately interpreted, along with the full range of equivalents to which the claims are entitled.

The invention aims at detecting a fault injection on a sensitive operation executed in a secure electronic token. The main idea of the invention is that such a fault injection attack will modify the execution flow of this sensitive operation, and therefore also modify its processing time. Consequently monitoring the processing time of executed operations will enable to detect a fault injection attack.

The invention may apply to any type of electronic token. The secure electronic token described here below may be a smartcard which is a plastic card with. Smartcards are portable, secure, and tamper-resistant. Smart cards provide security services in many domains including telecommunication, banking, commerce, and citizen identity. Smart cards can take different forms, such as credit card shaped cards with electrical connectors to connect the smart card to a smart card reader, USB tokens with embedded smart cards, and SIM cards for use in mobile telephones and tablet devices.

The secure electronic token may be any other kind of electronic token or portable device including a microprocessor and storage, such as a smart memory card, a mobile phone, a tablet, a laptop...

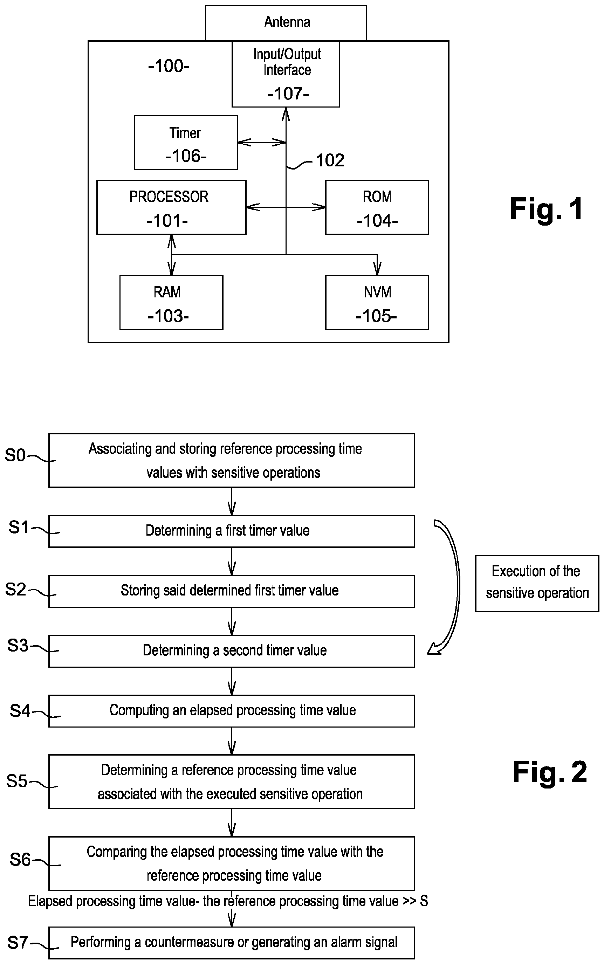

**Figure 1** is a schematic illustration of such a secure electronic token 100, It includes a processor 101 connected via a bus 102 to a random access memory (RAM) 103, a read-only memory (ROM) 104, and/or a non-volatile memory (NVM) 105.

The secure electronic token 100 also includes a timer 106 usable to provide timestamps during the execution of sensitive operations by the secure electronic token 100. Such a timer may be a hardware timer implemented as an electronic circuit or chip of the secure electronic token 100. It may also be a software timer executed by the processor of the secure electronic token 100.

The secure electronic token 100 may further include an antenna usable to connect the secure electronic token 100 to various forms of wireless networks, e.g., wide-area networks, WiFi networks, or mobile telephony networks. Alternatively, the secure electronic token 100 may connect to communication networks via a wired connection using for example the Ethernet protocol. The secure electronic token 100 may also include input/output means 107 providing interfaces to the user of the secure electronic token 100, such as one or more screens, loudspeakers, a mouse, tactile surfaces, a keyboard...

The following paragraphs describe the steps of a **method** performed by the secure electronic token 100 **for detecting an attack by fault injection on a sensitive operation** executed by said secure electronic token 100 according to a first aspect of the invention as depicted on **figure 2****.** As an example, such a sensitive operation may comprise an operation among a checksum verification, an access control check, a cryptographic process; and such an attack may result in skipping all or part of the sensitive operation or in reducing its level of security, for example by replacing an execution of a first cryptographic process by an execution of a second cryptographic process less secure than the first cryptographic process, such as replacing Triple DES algorithm execution by simplified DES algorithm execution.

In a first step S1, before the execution of the sensitive operation, the processor of the secure electronic token determines a first timer value using the timer 106. This first timer value will be used in the following steps as a timestamp of the beginning of the execution of the sensitive operation. It may be determined at the very beginning of the execution of this operation, just before the execution of the first processor cycle dedicated to the execution of this operation. Alternatively, it may also be determined at some step of a previous operation, for example at some step of another operation launching the execution of the sensitive operation.

In a second step S2, the processor stores the determined first timer value in a memory of the secure electronic token, for example in its random access memory (RAM) 103 or non-volatile memory (NVM) 105.

In a third step S3, the processor of the secure electronic token determines a second timer value using the timer 106 after the execution of the sensitive operation. It may be determined at the end of this execution, right after the last processor cycle dedicated to the execution of this operation. It may also be determined at a later time, after some additional operations are performed, for example when control goes back to the process that called the execution of the sensitive operation.

In a fourth step S4, the processor computes an elapsed processing time value from the first timer value and the second timer value. This processing time value is representative of the time needed by the processor for executing the sensitive process. As explained before, this measured processing time is correlated to the operations actually executed by the secure electronic token. Consequently it may be indicative of a fault injection attack performed between the two timestamps provided by the timer 106.

In a fifth step S5, the processor determines a reference processing time value associated with the executed sensitive operation. This reference processing time is determined among reference processing time values stored in a memory of the secure electronic token in association with sensitive operations executable by the secure electronic token and to be protected.

In a sixth step S6, the processor compares the computed elapsed processing time value with the determined reference processing time value. It enables the secure electronic token to verify if the actual processing time measured during the execution of the sensitive operation is close to the corresponding reference processing time for this operation, or if they are significantly different which could be indicative of a modified execution of the sensitive operation induced by a fault injection attack.

In a seventh step S7, when the difference between the computed elapsed processing time value and the determined reference processing time value is bigger than a predetermined threshold S, the processor detects an attack during the execution of the sensitive operation. It may then perform a countermeasure, such as a reset of the executed sensitive operation, an increase in security measures or a blocking of the processor. It may also generate an alarm signal.

In order to enable the processor to determine a reference processing time value associated with the executed sensitive operation during the fifth step S5, reference processing time values associated to sensitive operations to be protected executable by the secure electronic token shall be stored in a memory of the secure electronic token before the sensitive operation to be protected is executed by the processor of the secure electronic token. In order to do so, during a token personalization process reference processing time values may be associated with sensitive operations to be protected and such associations may be stored in a table in a memory of the secure electronic token in a step S0.

Such associations may be stored in the ROM 104 or the NVM 105 of the secure electronic token. During the execution of the sensitive operation, the processor of the secure electronic token may then access such associations by reading it in the ROM or NVM. Alternatively, the associations of reference processing time values and sensitive operations to be protected may be loaded in the RAM memory of the secure electronic token from the ROM or NVM, for example at its startup, and the processor may then access it by reading it in the RAM.

As a first example, each sensitive operation to be protected may be associated with a unique reference processing time value in the memory of the secure electronic token. In that case in the fifth step S5, the processor simply reads in memory the only reference processing time value associated with the executed sensitive operations.

The processing time of a given sensitive operation by the secure electronic token may vary depending on various properties such as the model of the secure electronic token, its age, its temperature... Such a variability is natural and resulting lower processing times shall not be mistakenly considered as the result of a fault injection attack. In order to take into account such a variability into the reference processing time values stored in the memory of the secure electronic token, for each sensitive operation to be protected the reference processing time value associated in the memory of the secure electronic token with said sensitive operation to be protected may be the smallest processing time value among multiple processing time values determined in factory for said sensitive operation to be protected for different combinations of properties of the secure electronic token among the model, the age, the temperature, the environment and the resistance to stress tests of the secure electronic token. Processing time values may be determined using different tokens whose chips are issued from different wafers, in order to encompass the impact on performances of the chip manufacturing process. Token age may be varied by using both new cards, just manufactured, and aged token which have run stress tests.

By doing so, for a given sensitive operation the processor of the secure electronic token may differentiate processing times higher than the reference processing time value which are very likely to be the result of said normal variability, and processing times lower than the reference processing time value which may be indicative of fault injection attack.

As a second example, for each sensitive operation to be protected, a plurality of reference processing time values may be associated with said sensitive operation to be protected in the memory of the secure electronic token. Such reference processing time values for a given sensitive operation may depend on different properties of the secure electronic token among the model, the age, the temperature, the environment and the resistance to stress tests of the secure electronic token. In that case during the fifth step S5, the processor may select a target processing time value as determined processing time value among the reference processing time values associated with the executed sensitive operation depending on the values of one or more properties of the secure electronic token at the time of execution of the executed sensitive operation. In other words, the processor shall select among the reference processing time values stored for the current sensitive operation, the one that best fits the current state of the secure electronic token. It enables the processor to get a reference processing time that is adapted to the state of the secure electronic token and that is therefore more accurate than a generic value independent of the state of the secure electronic token.

## Claims

1. A method for detecting an attack by fault injection on a sensitive operation executed in a secure electronic token comprising a processor (101), a memory (103, 104, 105) and a timer (106) configured for measuring time intervals,
said method comprising performed by said processor :
- before the execution of the sensitive operation, determining (S1) a first timer value using said timer (106),
- storing (S2) said determined first timer value in said memory,
- after the execution of the sensitive operation, determining (S3) a second timer value using said timer,
- computing (S4) an elapsed processing time value from the first timer value and the second timer value,
- an association between reference processing time values and sensitive operations to be protected executable by said secure electronic token being stored in said memory, determining (S5), among said stored reference processing time values, a reference processing time value associated with said executed sensitive operation,
- comparing (S6) the computed elapsed processing time value with the determined reference processing time value,
- when the difference between the computed elapsed processing time value and the determined reference processing time value is bigger than a predetermined threshold, performing (S7) a countermeasure or generating an alarm signal.

2. The method of claim 1, comprising associating (S0), during a token personalization process, said stored reference processing time values with sensitive operations to be protected and storing said associations in a table in said memory.

3. The method of claim 2, wherein each sensitive operation to be protected is associated with a unique reference processing time value.

4. The method of claim 3, wherein, for each sensitive operation to be protected, the reference processing time value associated in said memory with said sensitive operation to be protected is the smallest processing time value among multiple processing time values determined in factory for said sensitive operation to be protected for different combinations of properties of the secure electronic token among the model, the age, the temperature, the environment and the resistance to stress tests of the secure electronic token.

5. The method of claim 2, wherein for each sensitive operation to be protected, a plurality of reference processing time values are associated with said sensitive operation to be protected during said association step depending on different properties of said secure electronic token among the model, the age, the temperature, the environment and the resistance to stress tests of said secure electronic token and the step of determining a reference processing time value comprises a step of selection of a target processing time value, as determined processing time value, among the reference processing time values associated with said executed sensitive operation depending on values of one or more of said properties of the secure electronic token at the time of execution of said executed sensitive operation.

6. The method of claim 1, wherein said executed sensitive operation comprises an operation among a checksum verification, an access control check, a cryptographic process.

7. The method of claim 1, wherein said attack consists in replacing an execution of a first cryptographic process by an execution of a second cryptographic process less secure than the first cryptographic process.

8. The method of claim 7, wherein said attack consists in replacing Triple DES algorithm execution by simplified DES algorithm execution.

9. The method of claim 1, wherein said countermeasure is among a reset of said executed sensitive operation, an increase in security measures or a blocking of said processor.

10. A computer program product directly loadable into the memory of at least one computer, comprising software code instructions for performing the steps of claim 1 when said product is run on the computer.

11. A smartcard comprising a memory, a timer and a processor configured to perform the steps of claim 1.

12. The smartcard of claim 11, wherein said timer is a software timer or a hardware timer.
